# EUROPEAN PATENT APPLICATION

(11) **EP 1 746 200 A1**
(43) Date of publication of application: **24.01.2007**
(21) Application number: 06014252.8
(22) Date of filing: 10.07.2006
(51) Int. Cl.: D21B 1/32

(54) **Office paper recycling apparatus and process**

(30) Priority: 11.07.2005 IT MI20051307
(71) Applicant: Brambilla, Stefano, 20089 Rozzano (IT)
(72) Inventor: Brambilla, Stefano, 20089 Rozzano (IT)
(74) Representative: Pätzold, Herbert

(57) **Abstract**

An office paper recycling apparatus makes new office paper from used paper directly in an office building. The apparatus (1) comprises a used paper-feeding portion (58); a paper-shredding portion (57); a pulping portion (51); a paper-forming portion (52); a paper-press portion (53); a paper-drying portion (54); a paper-sizing portion (55); a paper-finishing portion (56) and a final paper-collecting portion (59), where the new sheets are collected and stacked, ready to be used in office equipment.

## Description

### CROSS-REFERENCE TO RELATED APPLICATIONS

This application is derived from, and claims the benefit of, Italian patent application MI2005A001307, filed on July 11, 2005, which is hereby incorporated by reference.

### FIELD OF INVENTION

In the field of paper recycling, self-contained office equipment that recycles discarded paper to make new paper.

### DESCRIPTION OF PRIOR ART

Paper recycling is becoming increasingly important in worldwide conservation efforts.

In Europe, the Confederation of European Paper Industries together with European Recovered Paper Association and the European Federation of Corrugated Board Manufacturers signed a declaration in 2000 committing the signatories to achieving a recycling rate of 56% by 2005. These parties agreed to strive for further improvements in the environmental performance of the industry through measures such as improved use of material and optimising collection systems.

The American Forest and Paper Association has set a paper recovery goal of 55% of all paper consumed by 2012 and announced a partnership with the U.S. Environmental Protection Agency to increase paper recovery in office buildings, municipalities and schools.

In fact, during the last few years and despite the boom of paperless technology, office paper consumption has increased. A very small percentage of used paper office is currently collected and the use of recycled paper is not common in many office buildings.

In 1990, a project called "National Office Paper Recycling Project" was initiated in the United States. This Project is a collaborative effort by The United States Conference of Mayors and private corporations and public interest groups. Its goal is to maximise recycling and minimise disposal of office paper.

The Project publishes an Office Paper Recycling Guide designed to assist employers, communities and building managers in establishing programs on office paper collection and buying recycled products. This Guide sets the following features of a successful recycling program at the office buildings: employees sort their recyclable paper into special containers beside or on their desk; a central storage area is used for collection and storage of used paper between pickups by recyclers; employees identify local recycling services; an enthusiastic coordinator is designated who fosters a sense teamwork and enlists the support of all the employees; a continuing promotion of the recycling program; and, buying recycled paper.

An object of the present invention is to enable anyone to make new office paper from recovered paper directly in office buildings.

Japanese Patent No. 10-317290 issued to Yokozuka describes a method and apparatus to recycle office paper in office buildings. This method provides that already shredded used paper is disintegrated with two sequential pulpers to obtain a recycled pulp, which is placed in a chest. A binder such as polyvinyl alcohol is then added thereto and the resultant mixture is stored while being slowly stirred. The recycled pulp is subsequently filled in a jetting device and blow on a rateable endless fibrous sheet and then dried with a drying roller and wound to afford the final new paper.

A significant drawback to the Yokozuka invention is that it does not provide all required steps for paper manufacturing. Furthermore, to save space in office buildings, it is not enough to miniaturize each step of paper making process, but a process should also simplify operations to make them easy to implement by unskilled labor. It is an object of the present invention to have a single, compact apparatus that performs all the required process steps to convert a used sheet of paper to a new, ready to use sheet of paper.

Accordingly, the present invention will serve to advance worldwide conservation efforts in paper recycling, to enable anyone to make new office paper from recovered paper directly in office buildings, to improve the state of the art in paper recycling by providing a single, compact apparatus that performs all the required process steps to convert a used sheet of paper to a new, ready to use sheet of paper.

### BRIEF SUMMARY OF THE INVENTION

An office paper recycling apparatus makes new office paper from used paper directly in an office building. The preferred embodiment of the apparatus is compact for use in an office and performs all the required process steps to convert a used sheet of paper to a new, ready to use sheet of paper. Portions of the preferred embodiment of the apparatus feed a single sheet of used paper, automatically into the apparatus; shred the paper; pulp the shredded paper by mixing with water and subjecting to it to mechanical action to become a slurry; form new paper from the slurry by spreading the paper fibers consolidating them into a thin mat for sheet formation; press the mat into a sheet by squeezing it between a series of rollers and continuous felts to remove the most of the water from the web; dry the sheet by passing it between a series of heated cylinders to take up final drying; size the sheet by passing it between rolls of polished metal to provide surface strength and smoothness; finish the paper sheet to obtain the desired dimensions; collect and stack the paper sheet for new uses.

### BRIEF DESCRIPTION OF THE DRAWINGS

The preferred embodiment of the invention is described in the drawings of which:

Fig.1 is a diagram showing an arrangement of the main portions of the office paper recycling apparatus.

Fig.2 is a cross sectional detail of the components of office paper recycling apparatus.

### DETAILED DESCRIPTION

The preferred embodiment of the office paper recycling apparatus is described hereinafter in reference to the drawings. As the following detailed description should not be taken to limit the invention, some steps of the process described may be performed in a different order and the others may be excluded. The description of the well-know devices to those skilled in the art will not be given in details.

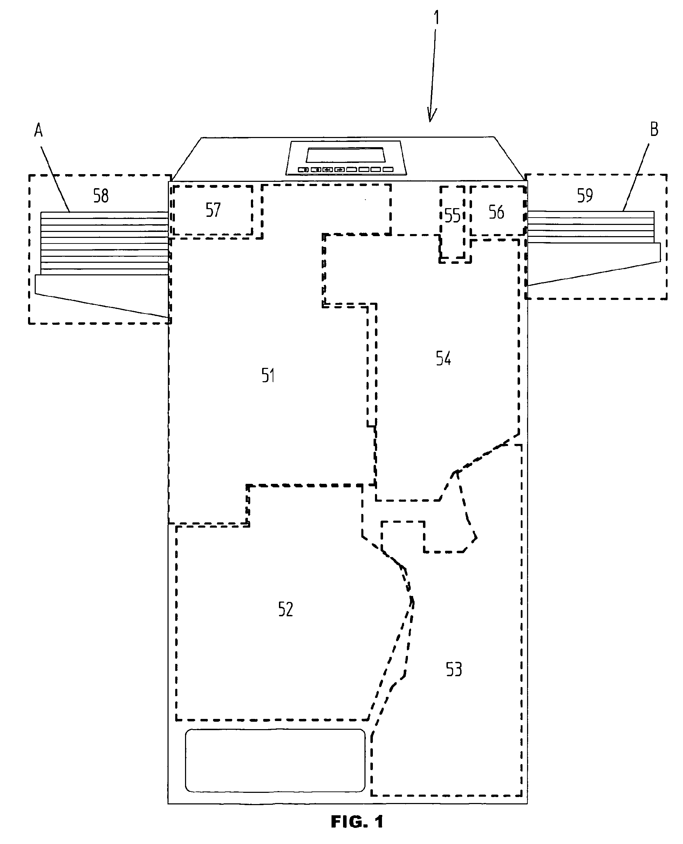

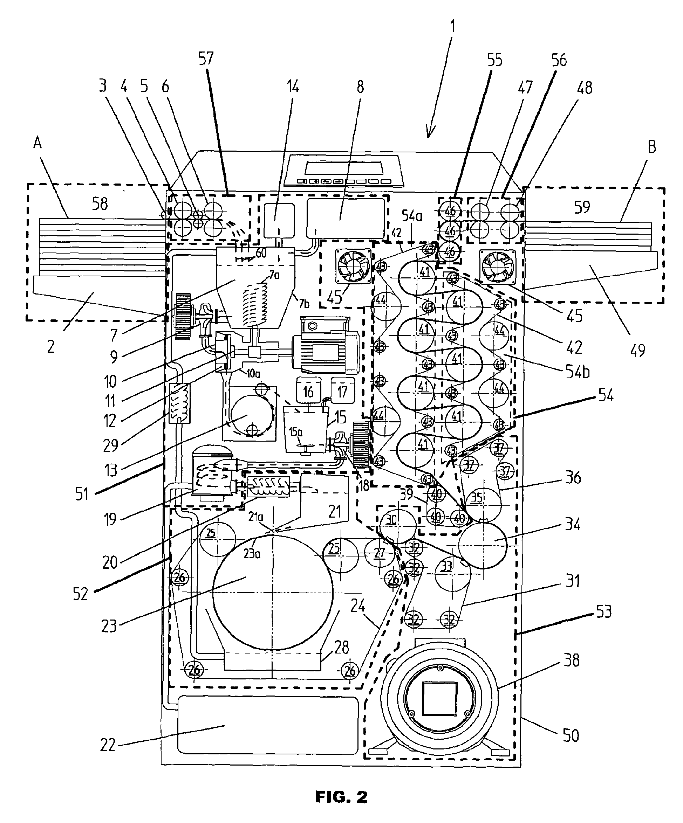

Referring to Fig.1, the apparatus (1) comprises a used paper-feeding portion (58); a paper-shredding portion (57); a pulping portion (51); a paper-forming portion (52); a paper-press portion (53); a paper-drying portion (54); a paper-sizing portion (55); a paper-finishing portion (56) and a paper-collecting portion (59), where the new sheets are collected and stacked, ready to be used in office equipments. These portions are now described in more detail with reference to Fig.2.

Used paper (A) in the form of sheets is manually loaded by operator onto the shelf (2) of a paper-feeding portion (58). Two banks of wheels (3, 5) catch the used sheet of paper and load it into the paper-shredding portion (57), where a bank of circular knives (4) and rotary blades (6) shred the sheet of paper. Fragments of paper (60) are then fed to a pulper (7), included in the pulping portion (51).

The pulper (7) is made up of a vessel (7b) having a partially conical cross section and the rotor blades (7a) inside, the blades pulp the paper and separate the ink from the paper by mechanical action and adding sufficient water from the tank (8) necessary to turn the pulped paper into a fiber slurry, commonly known as papermaking stock. Chemical additives from a tank (14) are added to pulper (7) as needed to increase whiteness and purity of the fibers. When the slurry reaches a predetermined thinning ratio and amalgamation, it is pumped to a deflaker (10) by the pump (9).

The deflaker (10) comprises a toothed rotor (11) and a stator (12) housed in a case (10a), where the fiber slurry is acted upon by mechanical forces and submitted to the strong acceleration, collisions and rubbing. The deflaker is capable of breaking up clots in fiber slurry.

In an alternative embodiment of the invention, the deflaker (10) comprises a refiner, where the fibers in the slurry are made shorter and more homogeneous. In another embodiment of the invention, the deflaker (10) comprises the toothed rotor (11), the stator (12) housed in a case (10a) and a refiner.

From the deflaker (10) the slurry is fed to a washing unit (13). The washing unit provides capability for removing ink from the slurry. Thus, the washing unit (13) is a drum thickener, wherein any ink from the original sheet is removed from the slurry.

In an alternative embodiment of the invention, ink is removed from the slurry by magnetic separation. In this embodiment, magnetite and other agglomerating chemicals are added in the pulper (7) and the slurry is subjected in washing unit (13) to a magnetic field to separate and remove the agglomerated ink particles.

The slurry is then collected in a holding tank (15), where a propeller (15a) creates a homogeneous mixture. Optional auxiliary chemicals and additives (e.g., clay, chalk and titanium dioxide) are added to the holding tank from auxiliary tanks (16, 17).

From the holding tank (15), a pump (18) moves the slurry to a screen (19) where non-fiber impurities are removed from the slurry. In the preferred embodiment, the screen (19) is a centrifugal screen made up of a cylindrical vessel having a tangential inlet and a drilled chest inside (screen). The vortex from centrifugation removes heavy particles and forces the slurry through the screen to an outlet. A second outlet directs waste (i.e. non-fibre impurities) to a holding tank (22).

In an alternative embodiment, the screen (19) is a pressure screen, where pressure is used to force the slurry through the screen.

A paper-forming portion (52) essentially comprises a rotatable forming drum (23) partially submerged in dilute pulp slurry in a vessel (28). The forming drum (23) has a surface (23a) covered by wire mesh. The paper-forming portion (52) is where the slurry starts to become new paper and the fibers are spread and consolidated into a thin mat.

In the preferred embodiment, an axial pump (20) conveys the slurry from the outlet in the holding tank (15) to a flow box (21), which squirts the slurry through a thin slit (21a) onto surface (23a) of the forming drum (23). The width of the slit is adjustable to achieve the desired dimensions of the output paper sheet.

A continuous fabric belt (24) is an endless wire felt. The belt (24) is wound around a circumferential segment of the forming drum (23) and is stretched by rollers (25), wire return rollers (26) and a couch roller (27). The couch roller is a suction couch roller with numerous small holes through which a high vacuum exists for the rapid removal of water from the fabric belt and the web as they travel over the roller. Water is partially drained away as the paper web is formed. The drained water is recovered in the vessel (28) and recycled to the pulper (7) by pump (29), creating a closed cycle.

The pick-up roller (30) removes the paper web from the fabric belt (24) after it exits the couch roller (27) and places it onto a press belt (31) in the paper-press portion (53). In this paper-press portion, the paper web goes through rollers (33,34,35) that squeeze and remove more water from the paper web.

The press belt (31) is tensioned by a suction roller (33) and a second set of wire return rollers (32). The paper web is stretched on a second fabric belt (36) by a second suction roller (35) and third set of wire return rollers (37). This removes some of the water in the paper web. The two suction rollers (33, 35) forming a double nip with nip roller (34), pressing out water. A suction pump (38) facilitates the dewatering operations of paper-press portion (53).

A transferring fabric belt (39) is tensioned by transferring rollers (40). Transferring fabric belt (39) picks up the paper web from the paper-press portion (53) and delivers it to the paper-drying portion (54).

The paper-drying portion (54) is made up by two series (54a, 54b) of heated cylinders (41) and two paper-drying fabric belts (42). The paper-drying fabric belts (42), stretched by paper-drying rollers (44) and paper-drying tightening rollers (43), remove water from the paper web in the manner of a blotter. The paper web alternates through the heated cylinders on the paper-drying fabric belts such that water is removed by vaporization from the paper web and fabric belts through the transfer of heat. Thus, the heat creates steam, which in turn is removed from the apparatus with a ventilation fan (45). Ventilation minimizes a water-saturated environment within the apparatus housing or case (50).

After the drying process, the paper web goes into the paper-sizing portion (55). This section is made up of polished metal rollers (46), where the paper web goes through to smooth the surface and to get surface strength and uniform thickness.

The paper-finishing portion (56) includes slitting knives (47) and transversal rotary blades (48), which cut the sized paper web to single sheet dimensions. Such sheet dimensions would be any dimensions desired. Typical sheet dimensions would be those meeting the designation A4 and B4, and those having dimensions of 8.5x11 inches and 8.5x14 inches. The cut sheet is then collected in the paper-collecting portion (59), where new paper sheets (B) are stacked onto the shelf (49), ready to be used.

Alternative embodiments include a computer or central processing unit to automatically operate and control the working parameters of the apparatus.

The above-described embodiments including the drawings are examples of the invention and merely provide illustrations of the invention. Other embodiments will be obvious to those skilled in the art. Thus, the scope of the invention is determined by the appended claims and their legal equivalents rather than by the examples given.

## Claims

1. An office paper recycling apparatus having a unitary body comprising,
(a) a pulping portion (51) wherein used paper is transformed into a slurry;
(b) a paper-forming portion (52) wherein the slurry is spread and consolidated into a thin mat forming a paper web;
(c) a paper-press portion (53) wherein water is removed from the paper web;
(d) a paper-drying portion (54) wherein the paper web is dried;
(e) a paper-finishing portion (56) wherein the paper web is trimmed to a paper sheet;
(f) a paper-collecting portion (59) wherein the paper sheet is placed in a stack.

2. The apparatus of claim 1 further comprises of: a paper shredding portion (57) capable of cutting each sheet of used paper into fragments, shredding said fragments, and delivering shredded fragments to the pulping portion (51); a paper-sizing portion (55) wherein the surface of the paper web can be smoothed after it leaves the paper-drying portion (54); a paper-feeding portion (58) wherein paper can be automatically fed sheet by sheet to the pulping section.

3. The apparatus of claim 1 wherein the pulping portion (51) comprises a pulping unit (7); a deflaking unit (10); a washing unit (13); a holding tank (15); a screen (19); and, a waste collecting tank (22).

4. The apparatus of claim 3 wherein the pulping portion comprises a centrifugal screen wherein a vortex removes heavy particles.

5. The apparatus of claim 3 wherein the pulping unit (51) comprises a vessel with rotor blades (7a) inside, wherein water may be added to the vessel on demand from a tank (8) and wherein chemical additives may be added from a second tank (14).

6. The apparatus of claim 3 wherein the deflaking unit (10) comprises a refining unit (10a) comprising a toothed rotor (11) and a stator (12) which is capable of breaking up clots in a fiber slurry, wherein the fibers in the slurry can be shortened and homogenized.

7. The apparatus of claim 3 wherein the washing unit (13) is a magnetic device capable of removing agglomerated ink.

8. The apparatus of claim 3 wherein the holding tank (15) is capable of receiving chemical additives from a plurality of auxiliary tanks (16,17) and comprises propellers (15a) to enable the creation of a homogeneous slurry.

9. The apparatus of claim 1 wherein the paper-forming portion (52) comprises a rotatable forming drum (23) with a wire mesh surface (23a), wherein said drum is partially submerged in dilute pulp slurry in a vessel (28) and wherein the wire mesh surface (23a) is capable of spreading and consolidating the slurry and forming a paper web when the drum is rotated.

10. The apparatus of claim 9 wherein the paper-forming portion (52) further comprises a flow box (21) wherein an adjustable slit (21a) in said flow box enables the flow of a thin slurry stream onto said wire mesh surface (23a).

11. The apparatus of claim 9 further comprising a continuous fabric belt (24) wherein said belt is wound around a circumferential segment of the rotatable forming drum (23) such that water can be drained from the paper web and sheet formation can take place, wherein water drained from the paper web can be recovered in the vessel (28) and recycled to the pulping portion (51).

12. The apparatus of claim 1 wherein the paper-press portion (53) comprises a plurality of suction rollers (33, 34, 35) wherein said suction rollers form a double nip with a nip roller to enable pressing out water from the paper web.

13. The apparatus of claim 1 wherein the paper-drying portion (54) comprises,
(a) two series of heated cylinders (54a, 54b);
(b) two paper-drying fabric belts (42); and
(c) a plurality of rollers (43, 44);
wherein the paper web can be alternated through the heated cylinders on the paper-drying fabric belts along the rollers such that water can be removed from the paper web and fabric belts by vaporization through the transfer of heat from the heated cylinders, wherein a fan (45) is capable of removing vaporized water from the apparatus.

14. The apparatus of claim 1 wherein the paper-finishing portion (56) comprises slitting knives (47) and transversal rotary blades (48) capable of cutting the sized paper web to single sheet dimensions.

15. The apparatus of claim 1further comprising a computer wherein said computer automatically operates and controls the working parameters of the apparatus.

16. A process of making new paper from used paper using the apparatus of claim 1 comprising the steps of,
(a) transforming used paper into a slurry of water and fibers in the pulping portion (51);
(b) spreading and consolidating the slurry into a thin mat forming a paper web in the paper-forming portion (52);
(c) removing water from the paper web in the paper-press portion (53);
(d) drying the paper web in the paper-drying portion (54);
(e) trimming the paper web to a sheet in the paper-finishing portion (56); and
(f) placing the sheet in a stack in the paper-collecting portion (59).
